# EUROPÄISCHE PATENTANMELDUNG

(11) **EP 4 749 856 A1**
(43) Veröffentlichungstag der Anmeldung: **27.05.2026**
(21) Anmeldenummer: 25207907.4
(22) Anmeldetag: 10.10.2025
(51) Int. Cl.: H02G 15/04, H01R 4/22, H01R 9/24, H01R 13/717

(54) **ISOLATIONSKAPPE, ISOLATIONSSYSTEM SOWIE VERFAHREN ZUR VERWENDUNG EINER ISOLATIONSKAPPE**

(30) Priorität: 22.11.2024 DE 102024134490
(71) Anmelder: Westnetz GmbH, 44139 Dortmund (DE)
(72) Erfinder: Bodschard, Marc, 54338 Schweich (DE)
(74) Vertreter: Bals & Vogel Patentanwälte PartGmbB

(57) **Zusammenfassung**

Die Erfindung betrifft eine Isolationskappe (10) für ein Kabel (51) umfassend einen Isolationskörper (11) zur, zumindest abschnittsweisen, Aufnahme des Kabels (51), wobei in dem Isolationskörper (11) eine Öffnung (12) zum Einbringen (110) des Kabels (51) in einen in dem Isolationskörper (11) ausgebildeten Hohlraum (13) ausgebildet ist und wobei an dem Isolationskörper (11) wenigstens ein Klemmelement (14) zur Fixierung der Isolationskappe (10) an dem Kabel (51) angeordnet ist, wobei das Klemmelement (14) relativ zu dem Isolationskörper (11) zwischen einer Freigabestellung (I) und einer Fixierstellung (II) bewegbar ist, wobei in der Fixierstellung (II) eine Klemmkraft von dem Klemmelement (14) auf das Kabel (51) übertragbar ist und wobei die Klemmkraft in der Freigabestellung (I) reduziert, insbesondere aufgehoben oder im Wesentlichen aufgehoben, ist.

## Beschreibung

Die Erfindung betrifft eine Isolationskappe, ein Isolationssystem sowie ein Verfahren zur Verwendung einer Isolationskappe.

Arbeiten an elektrischen Leitungen werden mitunter unter Spannung ausgeführt. Solche Arbeiten unter Spannung bergen ein vergleichsweise hohes Risiko, da eine höhere Wahrscheinlichkeit bspw. für Kurzschlüsse und Lichtbögen besteht. Um diese Risiken zu reduzieren, werden bei Arbeiten unter Spannung freiliegende Kabelenden bzw. Aderenden mit Isolationskappen abgedeckt. Diesbezüglich hat sich der Nachteil gezeigt, dass bekannte Isolationskappen, insbesondere bei mehrmaliger Benutzung, dazu neigen können, sich selbstständig von dem Kabel bzw. der Ader zu lösen, wodurch Arbeitsunfälle bei Arbeiten unter Spannung begünstigt werden können.

Es ist daher eine Aufgabe der vorliegenden Erfindung, wenigstens einen der voranstehend beschriebenen Nachteile zumindest teilweise zu überwinden. Insbesondere ist es Aufgabe der Erfindung eine Isolationskappe, ein Isolationssystem sowie ein Verfahren zur Verwendung einer Isolationskappe bereitzustellen, welche eine Steigerung der Arbeitssicherheit während der Durchführung von Arbeiten unter Spannung an elektrischen Kabeln bzw. Leitern ermöglichen.

Die voranstehende Aufgabe wird gelöst durch eine Isolationskappe gemäß einem ersten Aspekt der vorliegenden Erfindung, durch ein Isolationssystem gemäß einem zweiten Aspekt der vorliegenden Erfindung sowie durch ein Verfahren zur Verwendung einer Isolationskappe gemäß einem dritten Aspekt der vorliegenden Erfindung. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Isolationskappe beschrieben sind, selbstverständlich auch im Zusammenhang mit dem erfindungsgemäßen Isolationssystem und/oder im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Gemäß einem ersten Aspekt betrifft die vorliegende Erfindung eine Isolationskappe für ein Kabel umfassend einen Isolationskörper zur, zumindest abschnittsweisen, Aufnahme des Kabels, wobei in dem Isolationskörper eine Öffnung zum Einbringen des Kabels in einen in dem Isolationskörper ausgebildeten Hohlraum ausgebildet ist und wobei an dem Isolationskörper wenigstens ein Klemmelement zur Fixierung der Isolationskappe an dem Kabel angeordnet ist, wobei das Klemmelement relativ zu dem Isolationskörper zwischen einer Freigabestellung und einer Fixierstellung bewegbar ist, wobei in der Fixierstellung eine Klemmkraft von dem Klemmelement auf das Kabel übertragbar ist und wobei die Klemmkraft in der Freigabestellung reduziert, insbesondere aufgehoben oder im Wesentlichen aufgehoben, ist.

In anderen Worten wird eine Isolationskappe zur elektrischen Isolierung eines Kabels, insbesondere eines Kabelendes, vorgeschlagen. Es ist vorgesehen, dass die Isolationskappe einen Isolationskörper zur, zumindest abschnittsweisen Aufnahme, des Kabels umfasst. In dem Isolationskörper ist eine Öffnung ausgebildet, wobei durch diese Öffnung das Kabel in einem in dem Isolationskörper ausgebildeten Hohlraum einbringbar ist.

Erfindungsgemäß ist ferner vorgesehen, dass an dem Isolationskörper der Isolationskappe wenigstens ein Klemmelement angeordnet ist, wobei das Klemmelement relativ zu dem Isolationskörper zwischen einer Freigabestellung und einer Fixierstellung bewegbar ist. Die Fixierstellung soll ferner als eine Stellung des Klemmelements verstanden werden, in welcher eine Klemmkraft von dem Klemmelement auf das Kabel übertragbar ist bzw. übertragen wird. Hierzu kann vorgesehen sein, dass das Klemmelement das Kabel in der Fixierstellung, zumindest abschnittsweise, kontaktiert. Die Kontaktierung kann insbesondere auf einem Isolationsmantel des Kabels erfolgen. Durch die Klemmkraft wird ein Kraftschluss zwischen Isolationskappe und Kabel realisiert und die Isolationskappe, insbesondere positionsfest, an dem Kabel fixiert bzw. gesichert. Eine selbstständige Ablösung der Isolationskappe von dem Kabel kann auf diese Weise effektiv vermieden werden. Die Freigabestellung soll ferner als eine Stellung des Klemmelements verstanden werden, in welcher die in der Fixierstellung durch das Klemmelement erzeugbare bzw. erzeugte Klemmkraft zumindest reduziert bzw. aufgehoben oder im Wesentlichen aufgehoben ist. So kann das Klemmelement aus der Fixierstellung in die Freigabestellung überführt werden, um die Isolationskappe von dem Kabel zu entfernen bzw. auf das Kabel aufzustecken.

Durch eine erfindungsgemäße Isolationskappe ergibt sich der Vorteil, dass ein zuverlässiger Sitz der Isolationskappe auf dem Kabel realisiert wird. Die Fixierung der Isolationskappe wirkt dabei zuverlässig und unabhängig von einer Orientierung des Kabels. Eine schwerkraftbegünstigte Ablösung der Isolationskappe kann insofern ausgeschlossen werden. Auch versehentliche Kontaktierungen der Isolationskappe beeinträchtigen den Sitz der Isolationskappe an dem Kabel aufgrund der durch das Klemmelement erzeugten Klemmkraft nicht. Insofern ergibt sich bei Verwendung einer erfindungsgemäßen Isolationskappe ein reduziertes Risiko für Kurzschlüsse oder Lichtbögen sowie Verletzungen der an den Arbeiten beteiligten Personen und somit eine insgesamt gesteigerte Arbeitssicherheit.

Es kann bevorzugt vorgesehen sein, dass der Isolationskörper mit Ausnahme der Öffnung eine ansonsten geschlossene oder im Wesentlichen geschlossene, insbesondere elektrisch isolierende, Oberfläche aufweist. So kann eine bestmögliche Abschirmung des Kabels von einer möglichen Kontaktierung durch einen Benutzer realisiert werden. Sollte der Isolationskörper, bspw. zur, zumindest abschnittsweisen, Durchführung eines Klemmelements, lokal unterbrochen sein, so kann bevorzugt vorgesehen sein, dass die Unterbrechung bzw. Aussparung durch das Klemmelement vollständig oder im Wesentlichen vollständig verschließbar ist bzw. verschlossen ist, sodass auch in diesem Fall eine bestmögliche Abschirmung des Kabels von einer möglichen Kontaktierung durch einen Benutzer realisiert werden kann.

Im Rahmen der Erfindung kann es von Vorteil sein, dass wenigstens ein Klemmelement als eine Schraube ausgebildet ist. Hierzu kann insbesondere eine den Isolationskörper durchbrechende Aussparung, insbesondere Gewindebohrung, in dem Isolationskörper ausgebildet sein, in welcher das Klemmelement, zumindest abschnittsweise aufgenommen ist. Auf diese Weise kann ein Schaft der Schraube durch ein Einschrauben der Schraube in die Aussparung, zumindest abschnittsweise, in den Hohlraum des Isolationskörpers eingebracht und so eine Klemmkraft auf ein in dem Hohlraum befindliches Kabel erzeugt werden. Durch das Gewinde kann die Klemmkraft zuverlässig gehalten werden. Bevorzugt kann vorgesehen sein, dass die Schraube aus einem Kunststoff ausgebildet ist, damit auch bei einer Kontaktierung etwaiger freiliegender Leiter des Kabels durch das Klemmelement die Isolationsfunktion der Isolationskappe gewahrt wird.

Zusätzlich oder alternativ kann vorgesehen sein, dass wenigstens ein Klemmelement als ein Rastelement ausgebildet ist. Insbesondere kann auch in diesem Zusammenhang vorgesehen sein, dass eine den Isolationskörper durchbrechende Aussparung in dem Isolationskörper ausgebildet ist, in welcher das Klemmelement, zumindest abschnittsweise aufgenommen ist. Die Aussparung und das Klemmelement könne bevorzugt komplementäre Rastabschnitte, bspw. Rastzähne, aufweisen. Auf diese Weise kann das Rastelement, insbesondere in der Fixierstellung, kraftschlüssig an dem Isolationskörper gesichert werden.

Wenigstens ein Klemmelement kann bevorzugt außerhalb des Hohlraumes an dem Isolationskörper angeordnet sein. Zusätzlich oder alternativ kann wenigstens ein Klemmelementals eine Klemmschelle ausgebildet sein. Die Klemmschelle kann, zumindest abschnittsweiseaus einem, insbesondere elektrisch isolierenden Kunststoff oder einem anderen isolierenden Material ausgebildet sein. Der Kunststoff kann flexibel ausgestaltet sein. Insbesondere kann wenigstens eine solche Klemmschelle als zusätzliches, insbesondere zweites, Klemmelement verwendet werden.

Der Durchmesser der Klemmschelle kann bevorzugt zwischen 1% und 15% kleiner als ein Durchmesser des Kabels sein, bevorzugt zwischen 4% und 12% kleiner als der Durchmesser des Kabels und besonders bevorzugt zwischen 7% und 10% kleiner als der Durchmesser des Kabels sein. Insbesondere kann der Durchmesser zwischen 1% und 3% oder zwischen 4% und 6% oder zwischen 7% und 10% kleiner sein als der Durchmesser des Kabels. Damit kann eine zusätzliche Klemmkraft zwischen Kabel und der Isolationskappe bewirkt werden. Zudem sind weitere Klemmelemente denkbar, welche außerhalb des Hohlraumes an dem Isolationskörper angeordnet sind. Dadurch kann eine noch höhere Klemmkraft zwischen dem Kabel und der Isolationskappe bewirkt werden. Des Weiteren kann das zweite Klemmelement derart außerhalb des Hohlraumes an dem Isolationskörper angeordnet werden, wobei die Klemmkraft des zweiten Klemmelementes durch die Freigabestellung reduziert wird.

Es können mehrere Klemmelemente, insbesondere wenigstens zwei Klemmelemente, vorgesehen bzw. an dem Isolationskörper angeordnet sein. Wenigstens zwei Klemmelemente können identisch und/oder unterschiedlich ausgebildet sein.

Zusätzlich oder alternativ kann wenigstens ein Klemmelement als ein Exzenterspanner ausgebildet sein. Der Exzenterspanner kann bevorzugt schwenkbar an dem Isolationskörper gelagert sein. Durch die Ausbildung eines Klemmelements als Exzenterspanner ergibt sich eine besonders einfache und zuverlässige Handhabung des Klemmelements.

Im Rahmen der Erfindung ist es denkbar, dass wenigstens ein Klemmelement als ein federbelastetes Klemmelement ausgebildet ist, wobei das Klemmelement gegen eine Bewegung aus der Fixierstellung in die Freigabestellung vorgespannt ist. In anderen Worten ist denkbar, dass wenigstens ein Klemmelement in Wirkverbindung mit wenigstens einem Federelement steht, sodass das Klemmelement durch das Federelement gegen eine Bewegung aus der Fixierstellung in die Freigabestellung vorgespannt ist. Wird durch einen Benutzer also keine Kraft auf das Klemmelement ausgeübt, so befindet sich das Klemmelement aufgrund der Federbelastung in der Fixierstellung. Zum Überführen des Klemmelements in die Freigabestellung ist eine der Federkraft entgegenwirkende Krafteinwirkung des Benutzers erforderlich. Hierdurch ergibt sich eine einfache und für einen Benutzer intuitive Handhabung des Klemmelements. Gleichzeitig ergibt sich eine besonders zuverlässige Fixierung der Isolationskappe an dem Kabel, sodass die Überführung des Klemmelements in die Fixierstellung automatisch bei Entlastung des Klemmelements erfolgt und durch einen Benutzer nicht vergessen werden kann.

Es kann im Rahmen der Erfindung vorgesehen sein, dass der Isolationskörper und/oder wenigstens ein Klemmelement aus wenigstens einem Kunststoff ausgebildet sind. Insbesondere kann der Kunststoff als ein thermoplastischer Kunststoff ausgebildet sein. Als bevorzugt hat sich im Rahmen der Erfindung ein Kunststoff aus der Gruppe Polypropylen (PP), Polyoxymethylen Homopolymer (POM-H), Polyoxymethylen Copolymer (POM-C), Polyamid (PA), insbesondere PA6 oder PA66, Polyethylenterephthalat (PET). Bei dem Kunststoff kann es sich bevorzugt um einen glasfaserverstärkten Kunststoff handeln.

Glasfaserverstärkte Kunststoffe haben sich als vorteilhaft in Bezug auf ihre Eigenschaften zur elektrischen Isolation erwiesen.

Es ist ferner denkbar, dass die Öffnung und/oder der Hohlraum einen kreisförmigen Querschnitt aufweisen. Da Kabel meist ebenfalls einen kreisförmigen Querschnitt aufweisen, kann auf diese Weise ein vorteilhafter Formschluss zwischen dem Isolationskörper und dem Kabel realisiert werden. Hierdurch kann ein zuverlässiger Sitz der Isolationskappe an dem Kabel unterstützt werden.

Zusätzlich oder alternativ kann vorgesehen sein, dass der Isolationskörper einen kreisförmigen oder im Wesentlichen kreisförmigen Querschnitt aufweist. Dies hat sich insbesondere in Bezug auf eine materialsparende Herstellung des Isolationskörpers als vorteilhaft erwiesen. Alternativ kann der Isolationskörper einen ovalen, dreieckigen, rechteckigen, quadratischen oder anderweitig vieleckigen Querschnitt aufweisen. Insbesondere ein dreieckiger oder viereckiger, insbesondere quadratischer oder rechteckiger, Querschnitt hat sich in Bezug auf eine Verbindung der Isolationskappe mit wenigstens einer weiteren Isolationskappe als vorteilhaft erwiesen, da eine vorteilhafte Anlage der jeweiligen Isolationskappen aneinander realisierbar ist.

Auch ist es denkbar, dass in dem Hohlraum wenigstens ein elektrisches Kontaktelement zur Kontaktierung wenigstens eines freiliegenden Leiters des Kabels angeordnet ist, und wobei ferner wenigstens ein Warnmittel umfasst ist, wobei das Warnmittel durch einen Kontakt des elektrischen Kontaktelements mit einem spannungsführenden bzw. unter Spannung stehenden Leiter aktivierbar ist. In anderen Worten kann vorgesehen sein, dass an dem Isolationskörper, insbesondere in dem Hohlraum, wenigstens ein elektrisches Kontaktelement angeordnet ist. Bevorzugt kann ferner vorgesehen sein, dass durch die Isolationskappe wenigstens ein Warnmittel umfasst ist, wobei das Warnmittel mit dem elektrischen Kontaktelement derart in Wirkverbindung steht, dass das Warnmittel durch eine Kontaktierung des elektrischen Kontaktelements mit einem unter Spannung stehenden bzw. spannungsführenden Leiter des Kabels aktivierbar ist. Vorzugsweise kann ferner vorgesehen sein, dass das Warnmittel bei Abbruch des Kontakts zwischen dem elektrischen Kontaktelement und dem Leiter, bzw. wenn der Leiter spannungsfrei ist, deaktiviert wird oder deaktiviert bleibt.

Durch einen integrierten Spannungswarner kann ein Benutzer der Isolationskappe gezielt darauf aufmerksam gemacht werden, dass von dem Kabel ein Gefährdungspotential ausgeht und entsprechende Vorsicht bei der Handhabung geboten ist. Hierdurch kann, insbesondere aufgrund der erhöhten Aufmerksamkeit, ein Risiko für Arbeitsunfälle weiter gesenkt werden.

Unter der Aktivierung eines Warnmittels soll vorliegend verstanden werden, dass das Warnmittel in einen Zustand versetzt wird, in dem es wenigstens ein, insbesondere akustisches und/oder visuelles, Warnsignal aussendet, dass durch einen Benutzer der Isolationskappe wahrnehmbar ist. Als besonders vorteilhaft hat sich im Rahmen der Erfindung ein visuelles Warnsignal, insbesondere ein Warnlicht, erwiesen. Im Rahmen der Erfindung ist es optional möglich, dass wenigstens ein Warnmittel als ein Leuchtmittel, insbesondere als eine LED, ausgebildet ist. Ein Aktivieren des Warnmittels kann insofern bevorzugt ein, zumindest temporäres, Aufleuchten des Leuchtmittels umfassen bzw. bedeuten.

Es kann insbesondere vorgesehen sein, dass wenigstens ein Leuchtmittel, zumindest abschnittsweise, entlang eines äußeren Umfangs des Isolationskörpers um den Isolationskörper umläuft. Insbesondere kann wenigstens ein Leuchtmittel vollumfänglich um den Isolationskörper umlaufen. Hierdurch wird eine verbesserte Sichtbarkeit unabhängig von der Orientierung der Isolationskappe erreicht.

Ferner kann es im Rahmen der Erfindung vorgesehen sein, dass an dem Isolationskörper wenigstens eine Verbindungsschnittstelle zur, insbesondere lösbaren, Verbindung der Isolationskappe mit einer weiteren, insbesondere identischen oder im Wesentlichen identischen, Isolationskappe ausgebildet ist. Wenigstens eine Verbindungsschnittstelle kann bevorzugt an einer Außenseite bzw. Außenfläche des Isolationskörpers ausgebildet sein. Die Verbindungsschnittstelle kann bevorzugt zur Ausbildung einer formschlüssigen und/oder kraftschlüssigen Verbindung ausgebildet sein.

Es kann vorgesehen sein, dass an dem Isolationskörper mehrere Verbindungsschnittstellen ausgebildet sind. Bevorzugt ist denkbar, dass wenigstens zwei oder genau zwei Verbindungsschnittstellen, insbesondere an gegenüberliegenden Seiten des Isolationskörpers, ausgebildet sind. Wenigstens eine Verbindungsschnittstelle kann bspw. zur Herstellung einer Rast- oder Clipsverbindung ausgebildet sein. Hierdurch ergibt sich eine einfache Herstellbarkeit und Lösbarkeit der Verbindung.

Durch eine oder mehrere Verbindungsschnittstellen können Isolationskappen miteinander verbunden und gruppiert werden. Hierdurch kann eine sortierte Anordnung verschiedener Kabel sowie eine zusätzliche Fixierung der jeweiligen Kabel relativ zueinander realisiert werden. Verwechslungen aufgrund variabler Ausrichtungen und/oder Positionen der Kabel und der darauf angeordneten Isolationskappen können so vermieden werden.

In Bezug auf die vorliegende Erfindung ist es vorstellbar, dass an dem Isolationskörper wenigstens eine Markierung zur Kennzeichnung des Kabels ausgebildet ist. So kann bspw. für verschiedene Kabel jeweils eine Isolationskappe mit einer entsprechenden Kennzeichnung verwendet werden, um die jeweiligen Kabel eindeutig zu kennzeichnen und Verwechslungen somit zu vermeiden. Kennzeichnungen können bspw. "L1", "L2", "L3" oder "N" lauten. Hierdurch können bspw. die Adern eines Drehstromkabels jeweils eindeutig gekennzeichnet werden.

Gemäß einem zweiten Aspekt betrifft die vorliegende Erfindung ferner ein Isolationssystem, umfassend wenigstens ein Kabel sowie wenigstens eine, insbesondere erste, Isolationskappe gemäß einem der vorhergehenden Ansprüche, wobei das Kabel, zumindest abschnittsweise, in dem Hohlraum des Isolationskörpers angeordnet ist. Damit ergeben sich in Bezug auf ein erfindungsgemäßes Isolationssystem die gleichen Vorteile, wie sie bereits in Bezug auf eine erfindungsgemäße Isolationskappe beschrieben worden sind. Vorzugsweise kann vorgesehen sein, dass die Isolationskappe durch das Klemmelement an dem Kabel fixiert ist.

Das Kabel kann ein mehradriges Kabel sein. Besonders bevorzugt kann jedoch vorgesehen sein, dass das Kabel ein einadriges Kabel ist. Somit kann das Kabel bspw. eine Ader eines mehradrigen Kabels, insbesondere eines Drehstromkabels, sein. Das Kabel kann bevorzugt einen Isolationsmantel zur Isolierung wenigstens eines Leiters aufweisen.

Zusätzlich oder alternativ kann das Ende des Kabels durch einen freiliegenden Leiter ausgebildet sein. Hiermit ist gemeint, dass an dem Kabelende der Isolationsmantel entfernt ist und der Leiter somit freiliegt. Bevorzugt ist denkbar, dass das Kabel mit dem freiliegenden Leiter ein elektrisches Kontaktelement der Isolationskappe kontaktiert.

Ferner ist es vorstellbar, dass ferner wenigstens eine weitere, insbesondere zweite, Isolationskappe umfasst ist, wobei die, insbesondere erste, Isolationskappe und die wenigstens eine weitere, insbesondere zweite, Isolationskappe über wenigstens eine Verbindungsschnittstelle bzw. jeweilige Verbindungsschnittstellen der Isolationskappen, insbesondere lösbar, miteinander verbunden sind. Die wenigstens eine weitere Isolationskappe kann bevorzugt eine Isolationskappe gemäß dem ersten Aspekt der vorliegenden Erfindung sein.

Gemäß einem dritten Aspekt betrifft die vorliegende Erfindung ferner ein Verfahren zur Verwendung einer Isolationskappe gemäß dem ersten Aspekt der vorliegenden Erfindung und/oder eines Isolationssystems gemäß dem zweiten Aspekt der vorliegenden Erfindung, das Verfahren umfassend:
- zumindest abschnittsweises Einbringen eines Kabels in den Hohlraum des Isolationskörpers durch die in dem Isolationskörper ausgebildete Öffnung und
- Fixieren der Isolationskappe an dem Kabel durch Bewegen wenigstens eines Klemmelements aus der Freigabestellung in die Fixierstellung.

Damit ergeben sich in Bezug auf ein erfindungsgemäßes Verfahren die gleichen Vorteile, wie sie bereits in Bezug auf eine erfindungsgemäße Isolationskappe und/oder ein erfindungsgemäßes Isolationssystem beschrieben worden sind.

Im Rahmen der Erfindung kann es von Vorteil sein, dass ferner umfasst ist:
- Verbinden der Isolationskappe mit wenigstens einer weiteren Isolationskappe über wenigstens eine Verbindungsschnittstelle.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
- Fig. 1: eine schematische Ansicht einer Isolationskappe,
- Fig. 2: eine schematische Ansicht einer Isolationskappe,
- Fig. 3: eine schematische Ansicht einer Isolationskappe,
- Fig. 4: eine schematische Ansicht einer Isolationskappe,
- Fig. 5: eine schematische Ansicht einer Isolationskappe,
- Fig. 6: eine schematische Ansicht einer Isolationskappe,
- Fig. 7: eine schematische Ansicht eines Isolationssystems,
- Fig. 8: eine schematische Ansicht eines Isolationssystems und
- Fig. 9: eine schematische Ansicht eines Verfahrens.

In den Figuren werden für die gleichen technischen Merkmale, auch von unterschiedlichen Ausführungsbeispielen, die identischen Bezugszeichen verwendet.

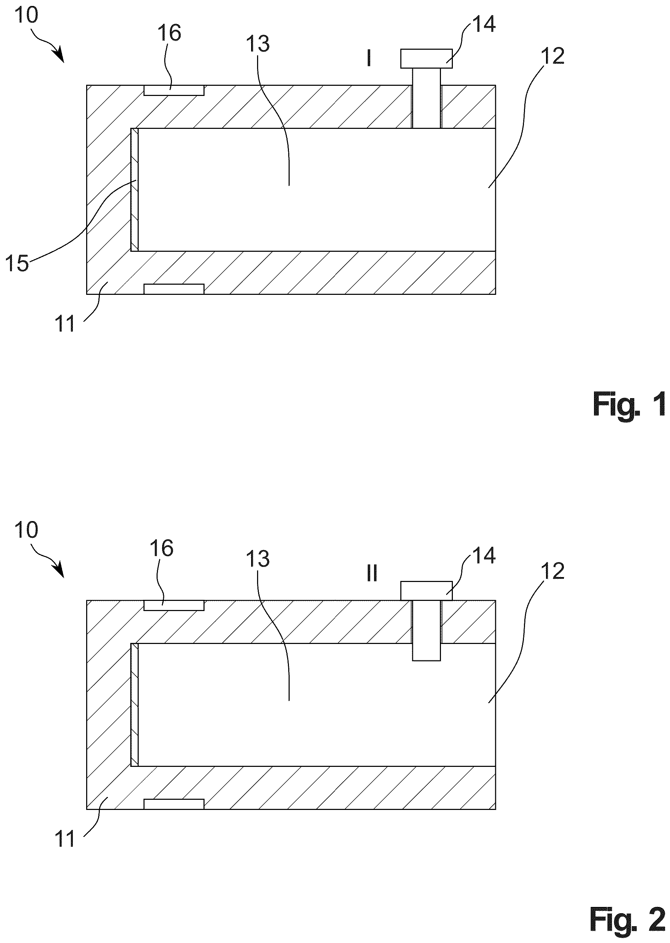

Die Fig. 1 und 2 zeigen eine Isolationskappe 10 für ein Kabel 51 umfassend einen Isolationskörper 11 zur, zumindest abschnittsweisen, Aufnahme des Kabels 51, wobei in dem Isolationskörper 11 eine Öffnung 12 zum Einbringen 110 des Kabels 51 in einen in dem Isolationskörper 11 ausgebildeten Hohlraum 13 ausgebildet ist und wobei an dem Isolationskörper 11 wenigstens ein Klemmelement 14 zur Fixierung der Isolationskappe 10 an dem Kabel 51 angeordnet ist. Das Klemmelement 14 ist zwischen einer in Fig. 1 gezeigten Freigabestellung I und einer in Fig. 2 gezeigten Fixierstellung II relativ zu dem Isolationskörper 11 bewegbar, wobei in der Fixierstellung II eine Klemmkraft von dem Klemmelement 14 auf das Kabel 51 übertragbar ist und wobei die Klemmkraft in der Freigabestellung I reduziert, insbesondere aufgehoben oder im Wesentlichen aufgehoben, ist.

Im vorliegenden Fall ist das Klemmelement 14 als eine Schraube ausgebildet. Hierzu ist eine den Isolationskörper 11 durchbrechende Gewindebohrung in dem Isolationskörper 11 ausgebildet, in welcher die Schraube, zumindest abschnittsweise, aufgenommen ist. Auf diese Weise kann ein Schaft der Schraube durch ein Einschrauben der Schraube in die Aussparung, zumindest abschnittsweise, in den Hohlraum 13 des Isolationskörpers 11 eingebracht und so eine Klemmkraft auf ein in dem Hohlraum 13 befindliches Kabel 51 erzeugt werden.

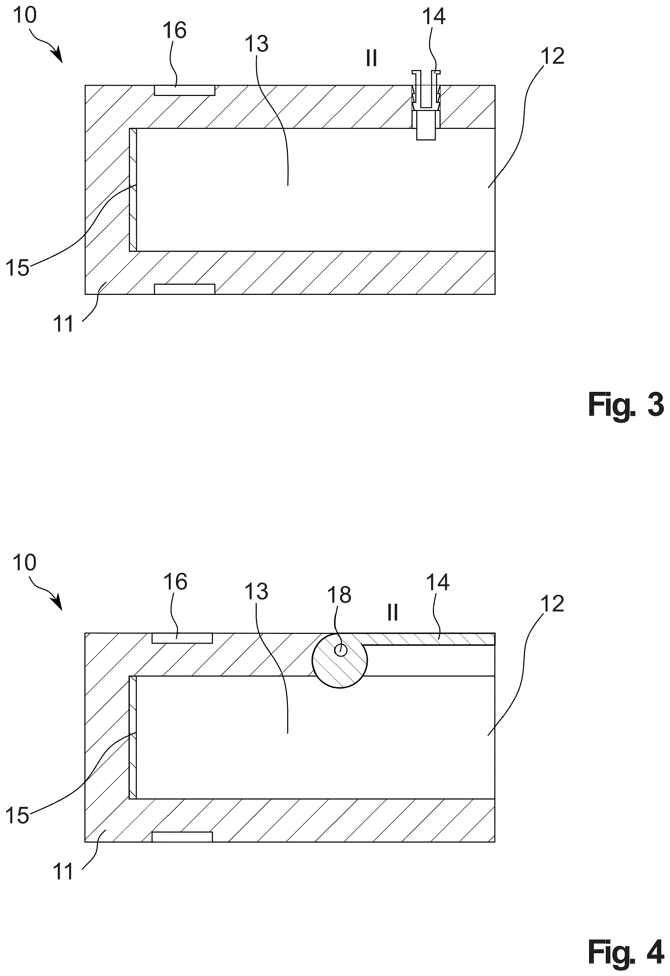

In Fig. 3 ist ebenfalls eine schematische Ansicht einer Isolationskappe 10 dargestellt, wobei das Klemmelement 14 als ein Rastelement ausgebildet ist. In dem Isolationskörper 11 ist eine den Isolationskörper 11 durchbrechende Aussparung ausgebildet ist, in welcher das Klemmelement 14, zumindest abschnittsweise, aufgenommen ist. Die Aussparung und das Klemmelement 14 weisen komplementäre Rastabschnitte, bspw. Rastzähne, auf.

In Fig. 4 ist ebenfalls eine schematische Ansicht einer Isolationskappe 10 dargestellt, wobei das Klemmelement 14 als ein Exzenterspanner ausgebildet ist. Das Klemmelement 14 ist vorliegend in einer Fixierposition II gezeigt und kann zur Überführung in die Freigabeposition I in Bezug auf Fig. 4 gegen den Uhrzeigersinn um die Drehachse 18 verschwenkt werden.

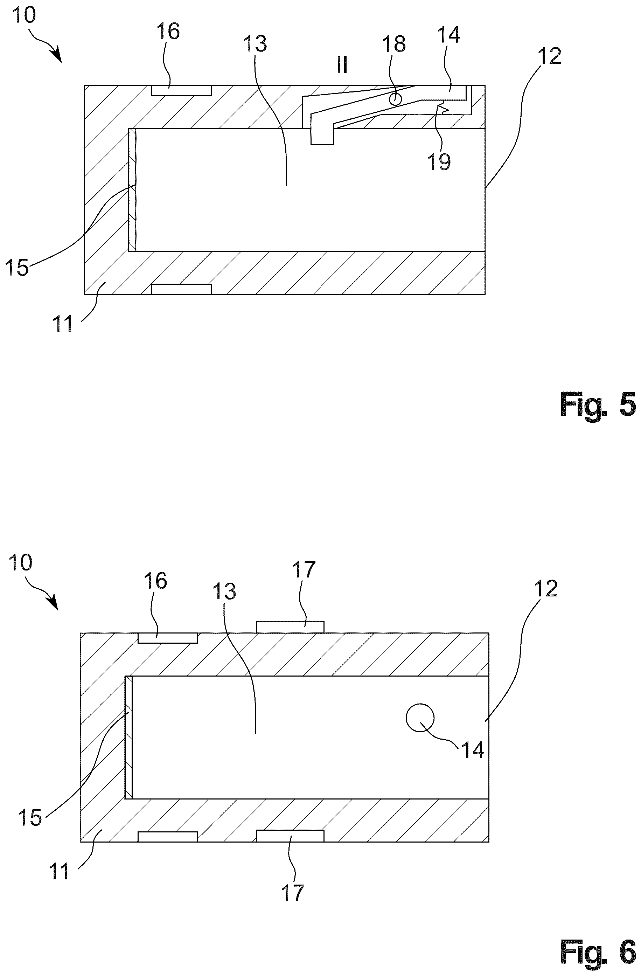

Fig. 5 zeigt ferner eine schematische Ansicht einer Isolationskappe 10, wobei das Klemmelement 14 als ein federbelastetes Klemmelement 14 ausgebildet ist, welches durch das Federelement 19 gegen eine Bewegung aus der in Fig. 4 dargestellten Fixierstellung II in die Freigabestellung I vorgespannt ist. Hierzu kann ein Benutzer Druck auf das Klemmelement 14 ausüben und es auf diese Weise um die Drehachse 18 verschwenken, um das Klemmelement 14 außer Eingriff mit dem Hohlraum 13 zu bringen.

Die in Fig. 1 bis 5 gezeigten Isolationskappen 10 umfassen wenigstens ein elektrisches Kontaktelement 15, welches in dem Hohlraum 13, vorliegend an einem stirnseitigen Ende des Hohlraums 13, angeordnet ist. Das elektrische Kontaktelement 15 dient der Kontaktierung eines freiliegenden Leiters 51.1 eines in der Isolationskappe 10 aufgenommenen Kabels 51.

Ferner umfassen die Isolationskappen 10 wenigstens ein Warnmittel 16, welches durch einen Kontakt des elektrischen Kontaktelements 15 mit einem spannungsführenden Leiter 51.1 eines in der Isolationskappe 10 aufgenommenen Kabels 51 aktivierbar ist. Hierzu kann eine elektrische Verbindung zwischen dem Warnmittel 16 und dem elektrischen Kontaktelement 15 zur Energieversorgung des Warnmittels 16 vorgesehen sein. Diese elektrische Verbindung kann vorzugsweise in das Material der Isolationskappe 10 integriert sein bzw. vollständig durch das Material der Isolationskappe 10 umschlossen sein. Die elektrische Verbindung kann einen Widerstand umfassen. Vorliegend ist das Warnmittel 16 als eine um den äußeren Umfang des Isolationskörpers 11 vollständig umlaufendes Leuchtmittel, insbesondere LED, ausgebildet.

In Fig. 6 ist ferner die in Fig. 1 und 2 dargestellte Isolationskappe 10 in einer abweichenden Seitenansicht dargestellt. Es wird ersichtlich, dass die Isolationskappe 10 wenigstens eine Verbindungsschnittstelle 17 zur, insbesondere lösbaren, Verbindung der Isolationskappe 10 mit einer weiteren, insbesondere identischen oder im Wesentlichen identischen, Isolationskappe 10 ausgebildet ist. Hierzu weist die Isolationskappe 10 komplementär ausgebildete Verbindungsschnittstellen 17, insbesondere ähnlich eines Lego-Systems, auf gegenüberliegenden Seiten des Isolationskörpers 11 auf.

Eine Verbindungsschnittstelle 17 ist als ein Fortsatz ausgebildet, die andere Verbindungsschnittstelle 17 als eine Aussparung zur Aufnahme eines solchen Fortsatzes. Durch Einbringen des Fortsatzes in eine bei einer weiteren Isolationskappe 10 ausgebildete Aussparung kann eine form- bzw. kraftschlüssige Verbindung zwischen den Isolationskappen 10 realisiert werden. Wenigstens ein Fortsatz und/oder wenigstens eine Aussparung können einen ovalen, dreieckigen, viereckigen oder anderweitig vieleckigen Querschnitt aufweisen. Hierdurch kann eine verdrehsichere Verbindung zwischen den Isolationskappen 10 realisiert werden.

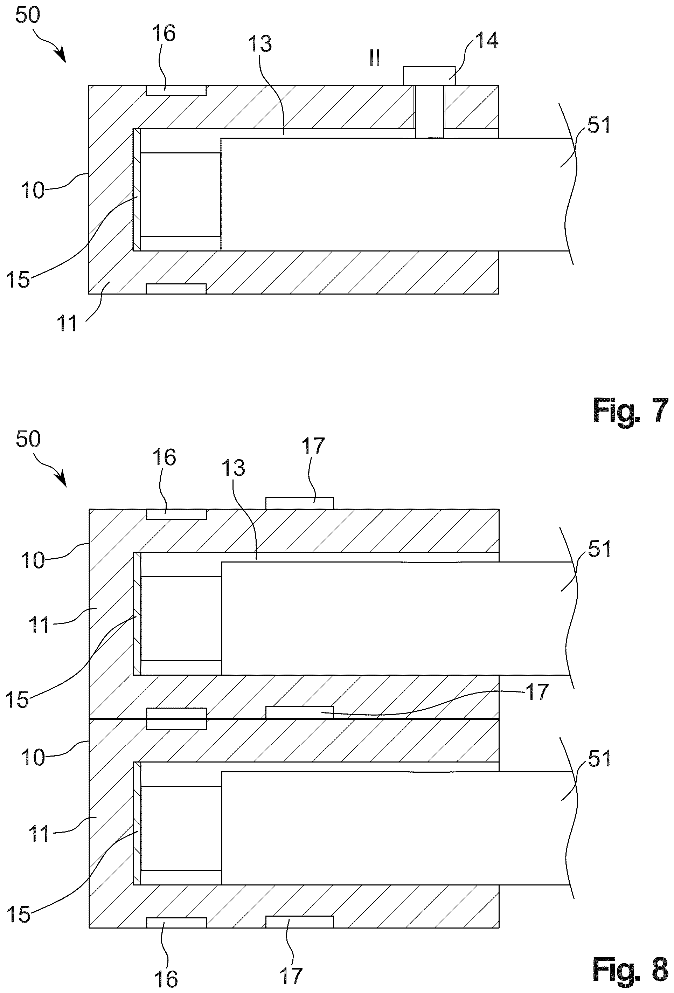

Fig. 7 zeigt ferner eine schematische Ansicht eines Isolationssystems 50 umfassend wenigstens ein Kabel 51 sowie wenigstens eine Isolationskappe 10 gemäß dem ersten Aspekt der vorliegenden Erfindung, wobei das Kabel 51, zumindest abschnittsweise, in dem Hohlraum 13 des Isolationskörpers 11 angeordnet ist.

Fig. 8 zeigt ein weiteres Isolationssystem 50, wobei eine erste Isolationskappe 10 und eine zweite Isolationskappe 10 umfasst sind, die über jeweilige Verbindungsschnittstellen 17 lösbar miteinander verbunden sind.

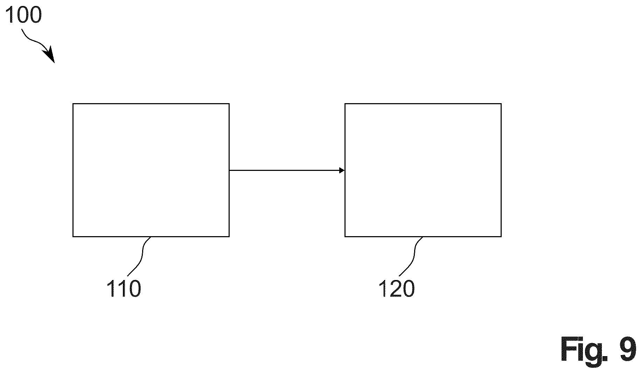

Fig. 9 zeigt ferner eine schematische Ansicht eines Verfahrens 100 zur Verwendung einer Isolationskappe 10 gemäß dem ersten Aspekt der vorliegenden Erfindung, umfassend:
- zumindest abschnittsweises Einbringen 110 eines Kabels 51 in den Hohlraum 13 des Isolationskörpers 11 durch die in dem Isolationskörper 11 ausgebildete Öffnung 12 und
- Fixieren 120 der Isolationskappe 10 an dem Kabel 51 durch Bewegen wenigstens eines Klemmelements 14 aus der Freigabestellung I in die Fixierstellung II.

### Bezugszeichenliste

- 10: Isolationskappe
- 11: Isolationskörper
- 12: Öffnung
- 13: Hohlraum
- 14: Klemmelement
- 15: elektrisches Kontaktelement
- 16: Warnmittel
- 17: Verbindungsschnittstelle
- 18: Drehachse
- 19: Federelement
- 50: Isolationssystem
- 51: Kabel
- 51.1: Leiter
- 100: Verfahren
- 110: Einbringen
- 120: Fixieren
- I: Freigabestellung
- II: Fixierstellung

## Patentansprüche

1. Isolationskappe (10) für ein Kabel (51) umfassend einen Isolationskörper (11) zur, zumindest abschnittsweisen, Aufnahme des Kabels (51), wobei in dem Isolationskörper (11) eine Öffnung (12) zum Einbringen (110) des Kabels (51) in einen in dem Isolationskörper (11) ausgebildeten Hohlraum (13) ausgebildet ist und wobei an dem Isolationskörper (11) wenigstens ein Klemmelement (14) zur Fixierung der Isolationskappe (10) an dem Kabel (51) angeordnet ist, wobei das Klemmelement (14) relativ zu dem Isolationskörper (11) zwischen einer Freigabestellung (I) und einer Fixierstellung (II) bewegbar ist, wobei in der Fixierstellung (II) eine Klemmkraft von dem Klemmelement (14) auf das Kabel (51) übertragbar ist und wobei die Klemmkraft in der Freigabestellung (I) reduziert, insbesondere aufgehoben oder im Wesentlichen aufgehoben, ist.

2. Isolationskappe (10) nach Anspruch 1,
**dadurch gekennzeichnet,**
**dass** wenigstens ein Klemmelement (14) als eine Schraube und/oder ein Rastelement und/oder ein Exzenterspanner ausgebildet ist.

3. Isolationskappe (10) nach einem der vorhergehenden Ansprüche,
**dadurch gekennzeichnet,**
**dass** wenigstens ein Klemmelement (14) als ein federbelastetes Klemmelement (14) ausgebildet ist, wobei das Klemmelement (14) gegen eine Bewegung aus der Fixierstellung (II) in die Freigabestellung (I) vorgespannt ist.

4. Isolationskappe (10) nach einem der vorhergehenden Ansprüche,
**dadurch gekennzeichnet,**
**dass** der Isolationskörper (11) und/oder wenigstens ein Klemmelement (14) aus wenigstens einem Kunststoff, insbesondere einem glasfaserverstärkten Kunststoff, ausgebildet ist.

5. Isolationskappe (10) nach einem der vorhergehenden Ansprüche,
**dadurch gekennzeichnet,**
**dass** die Öffnung (12) und/oder der Hohlraum (13) und/oder der Isolationskörper (11) einen kreisförmigen oder im Wesentlichen kreisförmigen Querschnitt aufweist.

6. Isolationskappe (10) nach einem der vorhergehenden Ansprüche,
**dadurch gekennzeichnet,**
**dass** in dem Hohlraum (13) wenigstens ein elektrisches Kontaktelement (15) zur Kontaktierung eines freiliegenden Leiters (51.1) des Kabels (51) angeordnet ist, und wobei ferner wenigstens ein Warnmittel (16) umfasst ist, wobei das Warnmittel (16) durch einen Kontakt des elektrischen Kontaktelements (15) mit einem spannungsführenden Leiter (51.1) aktivierbar ist.

7. Isolationskappe (10) nach Anspruch 6,
**dadurch gekennzeichnet,**
**dass** wenigstens ein Warnmittel (16) als ein Leuchtmittel, insbesondere als eine LED, ausgebildet ist.

8. Isolationskappe (10) nach Anspruch 7,
**dadurch gekennzeichnet,**
**dass** das Leuchtmittel, zumindest abschnittsweise, entlang eines äußeren Umfangs des Isolationskörpers (11) um den Isolationskörper (11) umläuft.

9. Isolationskappe (10) nach einem der vorhergehenden Ansprüche,
**dadurch gekennzeichnet,**
**dass** an dem Isolationskörper (11) wenigstens eine Verbindungsschnittstelle (17) zur, insbesondere lösbaren, Verbindung der Isolationskappe (10) mit einer weiteren, insbesondere identischen oder im Wesentlichen identischen, Isolationskappe (10) ausgebildet ist.

10. Isolationskappe (10) nach Anspruch 9,
**dadurch gekennzeichnet,**
**dass** die wenigstens eine Verbindungsschnittstelle (17) zur Herstellung einer Rast- oder Clipsverbindung ausgebildet ist.

11. Isolationskappe (10) nach einem der vorhergehenden Ansprüche,
**dadurch gekennzeichnet,**
**dass** an dem Isolationskörper (11) wenigstens eine Markierung zur Kennzeichnung des Kabels (51) ausgebildet ist.

12. Isolationssystem (50), umfassend wenigstens ein Kabel (51) sowie wenigstens eine Isolationskappe (10) gemäß einem der vorhergehenden Ansprüche, wobei das Kabel (51), zumindest abschnittsweise, in dem Hohlraum (13) des Isolationskörpers (11) angeordnet ist.

13. Isolationssystem (50) nach Anspruch 12,
**dadurch gekennzeichnet,**
**dass** ferner wenigstens eine weitere Isolationskappe (10) umfasst ist, wobei die Isolationskappe (10) und die wenigstens eine weitere Isolationskappe (10) über wenigstens eine Verbindungsschnittstelle (17), insbesondere lösbar, miteinander verbunden sind.

14. Verfahren (100) zur Verwendung einer Isolationskappe (10) gemäß einem der Ansprüche 1 bis 11, umfassend:
- Zumindest abschnittsweises Einbringen (110) eines Kabels (51) in den Hohlraum (13) des Isolationskörpers (11) durch die in dem Isolationskörper (11) ausgebildete Öffnung (12) und
- Fixieren (120) der Isolationskappe (10) an dem Kabel (51) durch Bewegen wenigstens eines Klemmelements (14) aus der Freigabestellung (I) in die Fixierstellung (II).

15. Verfahren (100) nach Anspruch 14,
**dadurch gekennzeichnet,**
**dass** ferner umfasst ist:
- Verbinden der Isolationskappe (10) mit wenigstens einer weiteren Isolationskappe (10) über wenigstens eine Verbindungsschnittstelle (17).
